# EUROPÄISCHE PATENTSCHRIFT

(11) **EP 2 829 207 B1**
(45) Veröffentlichungstag und Bekanntmachung des Hinweises auf die Patenterteilung: **06.04.2016**
(21) Anmeldenummer: 14177127.9
(22) Anmeldetag: 15.07.2014
(51) Int. Cl.: A47J 31/54

(54) **Durchlauferhitzer und Heißgetränkeautomat umfassend einen Durchlauferhitzer**
Continuous flow heater and hot drinks machine with a continuous flow heater
Chauffe-eau instantané et automate de boissons chaudes comprenant un chauffe-eau instantané

(30) Priorität: 24.07.2013 DE 102013214488
(43) Veröffentlichungstag der Anmeldung: 28.01.2015
(73) Patentinhaber: BSH Hausgeräte GmbH, 81739 München (DE)
(72) Erfinder: Gius, Josef, 83374 Traunwalchen (DE); Nöth, Christoph, 84558 Tyrlaching (DE)

(56) Entgegenhaltungen:
- EP-A2- 0 393 385
- DE-A1- 2 638 380

## Beschreibung

Die Erfindung betrifft einen Durchlauferhitzer mit einem elektrisch beheizbaren Wasserrohr, mit einem rohrförmig ausgebildeten Zu- und einem rohrförmig ausgebildeten Ablauf mit je einem einsteckbaren Anschlussteil das zum Anschluss zumindest einer Wasserleitung und gegebenenfalls weiterer Funktionselemente ausgebildet ist. Die Erfindung betrifft auch einen Heißgetränkeautomaten umfassend einen Durchlauferhitzer.

Durchlauferhitzer sind in der Regel festinstallierte Vorrichtungen zu Bereitung heißer Flüssigkeiten, insbesondere zur Bereitung von Heißwasser. Im Haushaltsbereich werden Durchlauferhitzer beispielsweise in Spül-, Wasch- oder Kaffeemaschinen eingesetzt.

Üblicherweise besteht ein Durchlauferhitzer aus einem Rohrheizkörper und einem flüssigkeitsführenden Wasserrohr, das in einem Endbereich rohrförmig ausgebildet ist und zumindest eine offene Stirnseite für einen Zu- und einen Ablauf für eine zu erhitzende Flüssigkeit aufweist. Der Rohrheizkörper besteht typischerweise aus einem Metallrohr, beispielsweise aus Aluminium oder Edelstahl, in dem ein spiralförmig gewickelter Heizdraht angeordnet ist. Zwischen Heizdraht und Metallrohr befindet sich zur elektrischen Isolation beispielsweise Quarzsand oder Magnesiumoxid. Die Enden des Metallrohres sind mit Keramikelementen verschlossen aus welchen zentrisch ein Metallstift ragt, der in elektrischem Kontakt mit dem jeweiligen Ende des Heizdrahtes steht. Der Rohrheizkörper ist zusammen mit dem flüssigkeitsführenden Wasserrohr in einem Aluminiumblock vergossen oder von außen flächig auf oder spiralförmig um das flüssigkeitsführende Wasserrohr gelötet.

Aus der EP 0 393 385 A1 ist eine Kaffeemaschine bekannt, bei der als Durchlauferhitzer ein zylindrisches, gerades Wasserohr verwendet wird. Das Wasserohr ist an seinen beiden Enden über Dichtringe in passende, als Kappen ausgebildete Anschlussteile eingesteckt. Die Anschlusskappen sind in einem Halter derart montiert, dass das Rohr axial zwischen ihnen eingespannt wird. Die Kappen besitzen radial verlaufende Öffnungen, in die Anschlussleitungen einsteckbar sind.

Aus der EP 1 713 364 A1 ist ein Heißgetränkeautomat, insbesondere eine Kaffeemaschine zur Kaffeezubereitung, insbesondere auf der Grundlage von Kaffeepads bekannt, die einen in einem Gehäuse befestigten Durchlauferhitzer mit einem Rohr zur Wasserführung aufweist, das an mindestens einem Ende einen Schlauchanschlussstutzen aufweist.

Ferner ist aus der WO 2008/077685 A1 ist ein pumpenbetriebener, elektrischer Durchlauferhitzer umfassend ein erstes, wasserzuführendes Rohrleitungsende mit Durchgangsbohrungen in der Mantelfläche, ein zweites, wasserabführendes Rohrleitungsende mit Durchgangsbohrungen in der Mantelfläche und ein Mantelrohr, dessen zumindest mittlerer Abschnitt mit zumindest einem Rohrheizkörper beaufschlagt ist, bekannt. Die Druckschrift offenbart auch einen Heißgetränkeautomaten mit einem Wasserbehälter oder einer sonstigen Wasserzuführung, einer elektromotorisch angetriebenen Pumpe und einer Getränkepulveraufnahmeeinrichtung sowie einen durch einen Durchlauferhitzer.

Letztgenannte Druckschrift beschäftigt sich auch mit der Verkalkung gattungsgemäßer Durchlauferhitzer. So wächst beispielsweise sowohl bei pumpenlosen wie auch bei pumpenbetriebenen Heißgetränkeautomaten, bei kalkhaltigem Wasser in dem Wasserrohr eine Kalkschicht an. Durch einen Entkalkungsvorgang oder auch schon durch die schnelle Erhitzung und Abkühlung, beispielsweise während eines Brühvorgangs, werden Teile von dieser Kalkschicht abgelöst und sammeln sich am tiefsten Punkt, insbesondere im Rohrsystem vor der Heizeinrichtung, an.

Bei pumpenbetriebenen Heißgetränkeautomaten werden zudem Kalkpartikel in das dem Durchlauferhitzer nachgeschaltete Rohrleitungssystem gedrückt. Dieses Rohrleitungssystem weist verschiedene Engstellen, beispielsweise Ventile, Düsen und/oder Verzweigungen, wie T- Stücke auf, die durch Kalkpartikel zugesetzt werden können. Bei leistungsstarken Durchlauferhitzern führt dies zu hohen Dampfdrücken und zum Auslösen von Sicherheitseinrichtungen, beispielsweise einer Übertemperatursicherung. Der Heißgetränkeautomat ist nicht länger funktionsfähig und muss gegebenenfalls zur Reparatur in eine Fachwerkstätte.

Ausgehend von diesem Stand der Technik ist es Aufgabe der vorliegenden Erfindung einen Durchlauferhitzer mit einem elektrisch beheizbaren Wasserrohr bereitzustellen der die Nachteile des Standes der Technik umgeht. Insbesondere sollten keine zu großen Kalkpartikel in das nachgeschaltete Rohrleitungssystem gespült werden.

Gelöst wird die Aufgabe von einem Durchlauferhitzer mit den Merkmalen der Patentanspruchs 1, sowie durch einen Heißgetränkeautomaten mit den Merkmalen des Anspruchs 8.

Die Erfindung baut auf gattungsgemäße Durchlauferhitzer dadurch auf, dass ein Anschlussteil ein in das Wasserrohr ragendes elastisches Kalksieb aufweist.

Das erfindungsgemäß elastische Kalksieb ist vorzugsweise zylinderförmig ausgebildet und weist mehrere Durchtrittsöffnungen in der Mantelfläche auf. Insbesondere bei Druckschwankungen, beispielsweise durch einen schnellen Temperaturwechsel, durch ein Hochheizen bis zum Dampfbetrieb oder durch den Pumpenbetrieb des Durchlauferhitzers entwickeln sich turbulente Strömungen in dem Wasserrohr. Diese Strömungen versetzen das erfindungsgemäße Kalksieb in Bewegung, gegebenenfalls in Schwingung. Dies wiederum bedingt, dass im Heißwasser oder Heißdampf mitgeführte große Kalkpartikel nicht über die sich in Bewegung befindlichen Durchtrittsöffnungen in das nachgeschaltete Rohrleitungssystem gespült werden können.

Ferner wurde gefunden, dass eine Anlagerung von Kalk, insbesondere ein Kalkwachstum auf einem sich zeitweise in Bewegung, gegebenenfalls in Schwingung versetzten, Kalksieb unterbleibt. Damit wird ein Verstopfen der Durchtrittsöffnungen verhindert. Insbesondere ein zylindeförmig ausgebildetes konzentrisch im Wasserrohr angeordnetes gummielastisches Kalksieb pulsiert während des Betriebes eines pumpenbetriebenen, elektrischen Durchlauferhitzers dergestalt, dass eine Anlagerung und/oder ein Zusetzen der Durchtrittsöffnungen nicht zu beobachten ist.

Die Anlagerung von Kalk auf dem erfindungsgemäßen Kalksieb lässt sich nahezu gänzlich vermeiden, wenn das gummielastische Material zudem Antihafteigenschaften und/oder geringe Oberflächenspannungen aufweist. In einer bevorzugten Ausführungsform ist das erfindungsgemäße Kalksieb daher ein vorzugsweise ein Spritzgussteil aus einem Polyorganosiloxan.

Die Anzahl, der Durchmesser und die Lage der Durchtrittsöffnungen in der Mantelfläche des erfindungsgemäßen Kalksiebs sind abhängig von der Verwendung des Durchlauferhitzers. Wird dieser in einem Heißgetränkeautomaten, wie beispielsweise einem Kaffeevollautomaten verwendet, weist die Mantelfläche 2 bis 20, vorzugsweise 5 bis 10 Durchtrittsöffnungen mit einem Durchmesser von zwischen 1 bis 5 mm auf. Die Öffnungen liegen vorzugsweise auf verschiedenen Abschnitten der Mantelfläche des vorzugsweise zylinderförmigen Kalksiebs. Denkbar ist auch, den Durchmesser der Durchtrittsöffnungen an den Durchmesser der engsten Stelle in dem nachgelagerten Rohrleitungssystem anzupassen. Vorzugsweise ist der Durchmesser der Durchtrittsöffnungen etwa halb so groß wie der Durchmesser der engsten Stelle in dem nachgelagerten Rohrleitungssystem. In einer Weiterbildung sind die Durchtrittsöffnungen orthogonal zur Mantelfläche des Wasserrohrs angeordnet.

Insbesondere in Kaffeevollautomaten sind die Durchlauferhitzer vertikal stehend bzw. hängend angebracht. Nach dem Abschalten der Pumpe sinken die im Wasser suspendierten Kalkpartikel geradlinig zum tiefsten Punkt im Wasserrohr. In einer bevorzugten Ausführungsform ist daher der Durchlauferhitzer durch zwei Anschlussteile mit je einem das Wasserrohr ragenden elastischen Kalksieb gekennzeichnet. Dies hat den Vorteil, dass kein Partikeleintrag in das wasserzuführende Rohrleitungssystem zu beobachten ist.

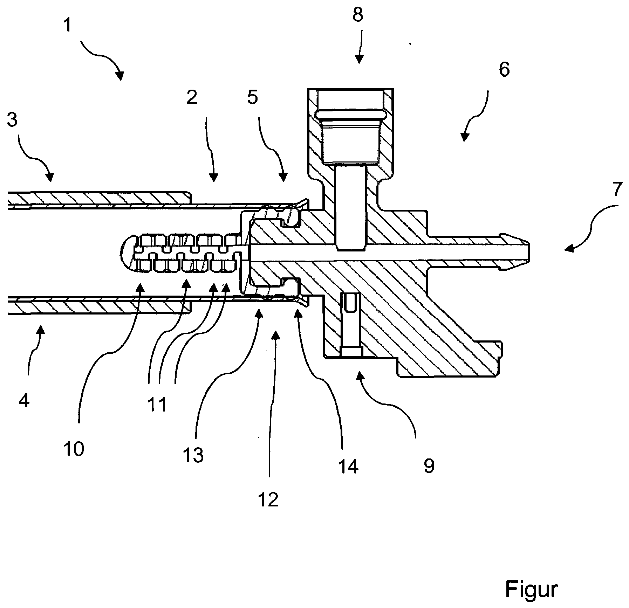

Die Erfindung wird nachfolgend mit Bezug auf die Figur anhand einer besonders bevorzugten Ausführungsform beispielhaft erläutert. Die Figur zeigt eine Schnittdarstellung einer Hälfte eines Durchlauferhitzers mit einem Anschlussteil und einem elastischen Kalksieb.

Der Durchlauferhitzer 1 weist ein elektrisch beheizbares Wasserrohr 2 mit zwei Rohrheizkörpern 3, 4 auf. In der Figur ist ferner ein rohrförmig ausgebildeter Ablauf 5 mit einem eingesteckten Anschlussteil 6 abgebildet. Das Anschlussteil 6 dient zum Anschluss zumindest einer Wasserleitung 7 und gegebenenfalls weiterer Funktionselemente, wie beispielsweise eines Temperaturfühlers 8 und eines Befestigungsmittels 9, wobei diese Funktionselemente nicht in der Figur dargestellt sind. Das Anschlussteil 6 weist ein in das Wasserrohr 2 ragendes elastisches Kalksieb 10 auf, das zylinderförmig ausgebildet und konzentrisch im Wasserrohr 2 angeordnet ist. Das Sieb 10 hat mehrere Durchtrittsöffnungen 11 in der Mantelfläche. Ferner weist das Kalksieb einen zylindrischen Abschnitt 12 auf, der zwischen dem eingesteckten Anschlussteil 6 und dem rohrförmig ausgebildeten Ablauf 5 ausgebildet ist. Mittels des zylindrischen Abschnitts 12 wird das Anschlussteil 6 kraftschlüssig in Wasserrohr 2 gehaltert. Der Kraftschluss wird durch ein ringförmiges Dichtmittel 13 erhöht. Auch die Halterung des Kalksiebs, insbesondere des zylindrischen Abschnitts 12 auf dem Anschlussteil 6 erfolgt über einen Kraftschluss, der zusätzlich über eine Nut-Feder-Verbindung 14 gesichert ist.

Der erfindungsgemäße Durchlauferhitzer eignet sich insbesondere für pumpenbetriebene Haushaltsgeräte, wie beispielsweise Wach-, Spül- oder Kaffeemaschinen. Durch die durch die Pumpe ausgelösten Druckschwankungen wird das elastische Kalksieb in Bewegung, beispielsweise in Schwingung und/oder Pulsation versetzt. Diese Bewegungen haben einen Selbstreinigungseffekt gegenüber einer Verkalkung des Siebs und insbesondere der Durchtrittsöffnungen.

### Bezugszeichenliste:

- 1: Durchlauferhitzer
- 2: Wasserrohr
- 3, 4: Rohrheizkörper
- 5: Ablauf
- 6: Anschlussteil
- 7: Anschluss für eine Wasserleitung
- 8: Anschluss für einen Temperaturfühler
- 9: Anschluss für ein Befestigungsmittel
- 10: Kalksieb
- 11: Durchtrittsöffnungen
- 12: zylindrischer Abschnitt
- 13: Dichtmittel
- 14: Nut-Feder-Verbindung

## Patentansprüche

1. Durchlauferhitzer (1) mit einem elektrisch beheizbaren Wasserrohr (2), mit einem rohrförmig ausgebildeten Zu- und einem rohrförmig ausgebildeten Ablauf (5) mit je einem einsteckbaren Anschlussteil (6) das zum Anschluss zumindest einer Wasserleitung und gegebenenfalls weiterer Funktionselemente ausgebildet ist, **dadurch gekennzeichnet, dass** zumindest ein Anschlussteil (6) ein in das Wasserrohr (2) ragendes elastisches Kalksieb (10) aufweist.

2. Durchlauferhitzer nach Anspruch 1, **dadurch gekennzeichnet, dass** das Kalksieb (10) zylinderförmig ausgebildet und konzentrisch im Wasserrohr (2) angeordnet ist, und mehrere Durchtrittsöffnungen (11) in der Mantelfläche aufweist.

3. Durchlauferhitzer nach Anspruch 1 oder 2, **dadurch gekennzeichnet, dass** das Kalksieb (10) einen zylindrischen oder ringförmigen Abschnitt (12) aufweist, der zwischen dem eingesteckten Anschlussteil (6) und dem rohrförmig ausgebildeten Ablauf (5) oder Zulauf ausgebildet ist.

4. Durchlauferhitzer nach Anspruch 3, **dadurch gekennzeichnet, dass** der zylindrische oder ringförmige Abschnitt (12) als ringförmiges Dichtmittel (13) an der Innenwand des rohrförmig ausgebildeten Ablaufs (5) oder Zulaufs anliegt.

5. Durchlauferhitzer nach einem der vorstehenden Ansprüche, **dadurch gekennzeichnet**, das Kalksieb (10) aus einem gummielastischen Material mit geringer Oberflächenspannung, insbesondere aus einem Polyorganosiloxan und das Anschlussteil (6) aus einem starren Kunststoffmaterial, insbesondere aus einem Polyamid oder einem Polyphtalamid besteht.

6. Durchlauferhitzer nach einem der vorstehenden Ansprüche, **dadurch gekennzeichnet, dass** Anschlussteil (6) und Kalksieb (10) einstückig ausgebildet sind.

7. Durchlauferhitzer nach einem der vorstehenden Ansprüche, **gekennzeichnet durch** zwei Anschlussteile (6) mit je einem in das Wasserrohr (2) ragenden elastischen Kalksieb (10).

8. Heißgetränkeautomat, insbesondere Kaffeevollautomat, mit einem Durchlauferhitzer (1) nach einem der vorstehenden Ansprüche.

## Claims

1. Continuous flow heater (1) with an electrically heatable water pipe (2) having an inlet and an outlet (5) embodied in the shape of a pipe in each case, each with an insertable connecting part (6) which is embodied to connect at least one water conduit and if necessary further functional elements, **characterised in that** at least one connecting part (6) has an elastic limescale filter (10) which projects into the water pipe (2).

2. Continuous flow heater according to claim 1, **characterised in that** the limescale filter (10) is embodied to be cylindrical and is arranged concentrically in the water pipe (2), and has a number of openings (11) in the lateral surface.

3. Continuous flow heater according to claim 1 or 2, **characterised in that** the limescale filter (10) has a cylindrical or annular section (12), which is embodied between the inserted connecting part (6) and the outlet (5) or inlet embodied in the shape of a pipe.

4. Continuous flow heater according to claim 3, **characterised in that** as an annular sealing means (13), the cylindrical or annular section (12) rests against the inner wall of the outlet (5) or inlet embodied in the shape of a pipe.

5. Continuous flow heater according to one of the preceding claims, **characterised in that** the limescale filter (10) consists of a rubber-elastic material with a low surface tension, in particular made of a polyorganosiloxane and the connecting part (6) consists of a rigid plastic material, in particular a polyamide or a polyphthalamide.

6. Continuous flow heater according to one of the preceding claims, **characterised in that** the connecting part (6) and the limescale filter (10) are embodied in one piece.

7. Continuous flow heater according to one of the preceding claims, **characterised by** two connecting parts (6) each with an elastic limescale filter (10) which projects into the water pipe (2).

8. Hot drinks machine, in particular fully automatic coffee machine, having a continuous flow heater (1) according to one of the preceding claims.

## Revendications

1. Chauffe-eau instantané (1) comprenant un tube d'eau (2) chauffable électriquement muni d'une arrivée réalisée de manière tubulaire et d'une sortie (5) réalisée de manière tubulaire comprenant respectivement une pièce de raccordement emboîtable (6) qui est réalisée pour le raccordement au moins d'une conduite d'eau et, le cas échéant, d'éléments fonctionnels supplémentaires, **caractérisé en ce qu'**au moins une pièce de raccordement (6) présente un filtre anti-calcaire (10) élastique faisant saillie dans le tube d'eau (2).

2. Chauffe-eau instantané selon la revendication 1, **caractérisé en ce que** le filtre anti-calcaire (10) est réalisé de manière cylindrique et est disposé de manière concentrique dans le tube d'eau (2), et **en ce qu'**il présente plusieurs ouvertures de passage (11) dans la surface d'enveloppe.

3. Chauffe-eau instantané selon la revendication 1 ou 2, **caractérisé en ce que** le filtre anti-calcaire (10) présente une section (12) cylindrique ou annulaire qui est réalisée entre la pièce de raccordement emboîtée (6) et la sortie (5) ou l'arrivée réalisée de manière tubulaire.

4. Chauffe-eau instantané selon la revendication 3, **caractérisé en ce que** la section (12) cylindrique ou annulaire est adjacente à la paroi intérieure de la sortie (5) ou de l'arrivée réalisée de manière tubulaire en tant que moyen d'étanchéité annulaire (13).

5. Chauffe-eau instantané selon l'une quelconque des revendications précédentes, **caractérisé en ce que** le filtre anti-calcaire (10) est constitué d'une matière élastique ayant une tension de surface moindre, notamment d'un polyorganosiloxane, et **en ce que** la pièce de raccordement (6) est constituée d'une matière plastique rigide, notamment d'un polyamide ou d'un polyphtalamide.

6. Chauffe-eau instantané selon l'une quelconque des revendications précédentes, **caractérisé en ce que** la pièce de raccordement (6) et le filtre anti-calcaire (10) sont réalisés d'une seule pièce.

7. Chauffe-eau instantané selon l'une quelconque des revendications précédentes, **caractérisé par** deux pièces de raccordement (6) munies chacune d'un filtre anti-calcaire (10) élastique faisant saillie dans le tube d'eau (2).

8. Distributeur de boisson chaude, notamment machine à café entièrement automatique, comprenant un chauffe-eau instantané (1) selon l'une quelconque des revendications précédentes.
